# EUROPÄISCHE PATENTANMELDUNG

(11) **EP 1 516 563 A1**
(43) Veröffentlichungstag der Anmeldung: **23.03.2005**
(21) Anmeldenummer: 03021095.9
(22) Anmeldetag: 18.09.2003
(51) Int. Cl.: A47B 88/10

(54) **Rollschubführung**

(71) Anmelder: Grass GmbH, 6973 Höchst/Vlbg. (AT)
(72) Erfinder: Amman, Jürgen, 6890 Lustenau (AT)
(74) Vertreter: Riebling, Peter, Dr.-Ing.

(57) **Zusammenfassung**

Die Erfindung betrifft eine Rollschubführung, insbesondere Schubladenführung (1) für Möbel, mit Schienen (2,3,4), die über Wälzkörper relativ zueinander in Längsrichtung verschieblich sind, welche Wälzkörper innerhalb von Wälzkörperkäfigen von Wälzkörperwagen (6,7) drehbar gelagert sind, wobei die Wälzkörperwagen (6,7) Kopplungseinrichtungen beinhalten, die zur wiederholt lösbaren, formschlüssigen und/oder kraftschlüssigen, unmittelbaren Kopplung mit mindestens einem benachbarten, zwischen den gleichen Schienen (2,3 oder 3,4) befindlichen, Wälzkörperwagen (6,7) dienen. Hauptvorteile der Erfindung sind, dass zwei oder mehrere Wälzkörperwagen (6,7) zuverlässig unmittelbar durch eine stabile Kupplung miteinander kombiniert werden können, ohne wesentlichen Versatz zueinander in den drei Raumachsen, so dass auch Synchron-Zahnstangen verwendet werden können zur Lauf-Synchronisierung der Schienen (2,3,4). Zur direkten Kopplung der Wälzkörperwagen (6,7) ist kein zusätzliches Halterungsstück/Zwischenstück wie beim Stand der Technik nötig, wodurch der Kostenaufwand für ein zusätzliches Werkzeug entfällt, der Abstand zwischen vorderen und hinteren Wälzkörpern beliebiger an die Länge der Führung angepasst werden kann, und die Wälzkörper auch im Mittelbereich von aneinander gekoppelten Wälzkörperwagen (6,7) montiert werden können. Die aneinander gekoppelten Wälzkörperwagen (6,7) sind damit auch für große Führungslängen und/oder Schwerlast-Führungen geeignet.

## Beschreibung

Die Erfindung betrifft eine Rollschubführung mit Wälzkörperwagen, vorzugsweise eine Schubladenführung als Vollauszug für Möbel, nach dem Oberbegriff des unabhängigen Anspruchs. Die Erfindung kann aber auch für eine Teilauszug-Schubladenführung verwendet werden, obwohl nachfolgend hier nur Systeme für Vollauszüge beschrieben werden.

Rollschubführungen mit Wälzkörperwagen sind bereits zahlreich aus dem Stand der Technik bekannt.

Aus der auf den gleichen Anmelder zurückgehende und nachveröffentlichte DE 102 47 160 ist eine Rollschubführung mit Wälzkörpern bekannt, die innerhalb von Wälzkörperwagen drehbar gelagert sind, wobei innerhalb der gemeinsamen Wälzkörperwagen die Wälzkörper im Vergleich zueinander mindestens teilweise derart unterschiedlich gestaltet sind, dass sich in einem geöffneten Zustand der Schublade die Gewichtbelastung gleichmäßiger auf die Wälzkörper verteilt.

Durch die Firma Hettich ist auch eine derartige Rollschubführung mit Wälzkörperwagen offenkundig geworden. Die kleinen Wälzkörperwagen sind am Ende eines "Halterungsstückes" aufgehängt, und die Länge dieses "Halterungsstückes" ist abhängig von der Länge der Führung. Der Nachteil ist, dass das gesamte System nicht sehr stabil ist. Druck- und Zugkräfte werden nur begrenzt übertragbar, und daher es ist keine steife Verbindung, so dass es nicht als Einheit vorzufertigen ist. Das System zwei Wälzkörperwagen die über ein Halterungsstück miteinander gekoppelt sind, hält nicht von selbst zusammen. Zusätzlich dazu kann dieses System nur innerhalb der relativ kleinen Wälzkörperwagen beliebig mit Wälzkörpern bestückt werden, nicht aber im Halterungsstück, das keine Wälzköperkäfige aufweist.

Die Aufgabe der vorliegenden Erfindung ist es, eine preiswerte Rollschubführung so zu gestalten, dass die Abstände zwischen den vorderen, mittleren und hinteren Wälzkörpern im gesamten Wälzkörperwagen so viel wie möglich beliebig an die Länge der Führung und/oder an die Last der Schublade adaptiert werden können, um eine Verbesserung der Lebensdauer,der Wälzkörper zu gewährleisten, bzw. um eine höhere Traglast zu ermöglichen.

Diese Aufgabe wird mit einer Rollschubführung mit Wälzkörperwagen mit den Merkmalen des unabhängigen Anspruchs gelöst.

Diese Aufgabe wird dadurch gelöst, dass die Wälzkörperwagen Kopplungseinrichtungen beinhalten, die zur wiederholt lösbaren, formschlüssigen und/oder kraftschlüssigen, unmittelbaren Kopplung mit mindestens einem benachbarten, zwischen den gleichen Schienen befindlichen, Wälzkörperwagen dienen.

Insbesondere werden zwei oder mehrere Wälzkörperwagen hintereinander stabil verbunden, um zusätzliche mögliche Abstände zwischen den vorderen, mittleren und hinteren Wälzkörpern zu erreichen und/oder verschiedene flexible Wälzkörperbestückungen zu ermöglichen.

Diese Lösung wird vorzugsweise für Führungslängen verwendet, die in kleinen Stückzahlen produziert werden oder für Schwerlast-Führungen. In diesen Fällen ist diese Lösung wirtschaftlich interessant.

Diese Lösung hat den Vorteil, dass weniger Werkzeuge für die verschiedenen Wälzkörperwagenlängen benötigt werden, wodurch sich ein preiswerterer Wälzkörperwagen ergibt.

Auch ergibt sich dadurch die Möglichkeit, die Wälzkörper beliebiger anzuordnen, weil bei Wälzkörperkombinationen mehr Käfige vorhanden sind. Vorzugsweise werden Wälzkörper im Mittelbereich des gesamten Wälzkörperwagens eingebracht.

Somit können die Wälzkörper weiter voneinander entfernt liegen, sie können auch beliebiger und optimiert je nach Bedarf bestückt werden (z.B., damit so wenig wie möglich Wälzkörper gebraucht werden). Es wird dadurch eine Verbesserung der Lebensdauer der Wälzkörper und die Verteilung der Belastung der Wälzkörper gewährleistet, was fast immer notwendig ist für Schwerlast-Schubladen.

Die Hauptvorteile der Erfindung sind also, dass zwei oder mehrere Wälzkörperwagen zuverlässig unmittelbar durch eine stabile Kupplung miteinander kombiniert werden können, ohne wesentlichen Versatz zueinander in den drei Raumachsen, so dass auch Synchron-Zahnstangen verwendet werden können zur Lauf-Synchronisierung der Schienen. Zur direkten Kopplung der Wälzkörperwagen ist also kein zusätzliches Halterungsstück/Zwischenstück wie beim Stand der Technik nötig, wodurch der Kostenaufwand für ein zusätzliches Werkzeug entfällt, der Abstand zwischen vorderen und hinteren Wälzkörpern beliebiger an die Länge der Führung angepasst werden kann, und die Wälzkörper auch im Mittelbereich von aneinander gekoppelten Wälzkörperwagen montiert werden können. Die aneinander gekoppelten Wälzkörperwagen sind damit auch für große Führungslängen und/oder Schwerlast-Führungen geeignet.

Der befahrene Weg des Zahnrades auf der Zahnstange wird sich vorzugsweise auf dem Hauptwälzkörperwagen befinden, welcher der längste der Wälzkörperwagen ist.

Ein zusätzlicher Wälzkörperwagen wird vorzugsweise am Ende des Hauptwälzkörperwagens angehängt, wo das Zahnrad angeordnet ist, wenn die Schublade geschlossen ist (so wird die Zahnstange des zusätzlichen Wälzkörperwagens vom Zahnrad nicht befahren).

Es ist aber zur Lösung der Aufgabe nicht notwendig, dass die Wälzkörperwagen eine Zahnstange haben! Darum wird dieses Problem hier nicht ausführlich beschreiben.

Die oberen und unteren kombinierten Wälzkörperwagen können auch unterschiedlich lang sein. Es soll für die Wirtschaftlichkeit und die Tragfähigkeit optimiert werden.

Die Verbindung zwischen den Wälzkörperwagen soll stabil genug sein, im Gegensatz zur Kopplung des Wälzkörperwagens beim Stand der Technik , damit die Druck- und Zugkräfte problemlos übertragen werden können. Dies wäre unbedingt notwendig, wenn das Zahnrad über alle kombinierte Wälzkörperwagen fahren soll.

Im folgenden wird die Erfindung anhand einer Ausführungsform näher beschrieben, die jedoch nur beispielhaft, nicht aber einschränkend aufzufassen sein soll.

Es zeigen:
- *Fig. 1 :*: eine perspektivische Ansicht einer Vollauszug-Schubladenführung im offenen Zustand, die sich in Einschubrichtung gesehen rechts im Möbelkorpus befindet;
- *Fig. 2 :*: eine perspektivische Ansicht der Schubladenführung nach Fig. 1 im zerlegten Zustand, (mit einstückigen Wälzkörperwagen);
- *Fig. 3* :: eine perspektivische Ansicht von zwei oberen Wälzkörperwagen (zwischen Schubladenschiene und Mittelschiene) nach der Erfindung, die verbunden werden können;
- *Fig. 4* :: eine Detailansicht der Fig. 3, wobei die Verbindungselemente der zwei sich gegenüberstehenden Wälzkörperwagen gezeigt sind;
- *Fig. 5:*: eine perspektivische Ansicht von zwei unteren Wälzkörperwagen (zwischen Mittelschiene und Korpusschiene) nach der Erfindung, die verbunden werden können;
- *Fig. 6:*: eine Detailansicht der Fig. 5, wobei die Verbindungselemente der Wälzkörperwagen gezeigt sind;
- *Fig. 7:*: Seitenansicht einer Vollauszug-Schubladenführung mit einstückigen Wälzkörperwagen;
- *Fig. 8 :*: Seitenansicht einer Vollauszug-Schubladenführung nach der Erfindung mit der Kombination von koppelbaren Wälzkörperwagen;
- *Fig. 9 :*: Seitenansicht einer Vollauszug-Schubladenführung nach der Erfindung mit einer anderen Kombination von koppelbaren Wälzkörperwagen.

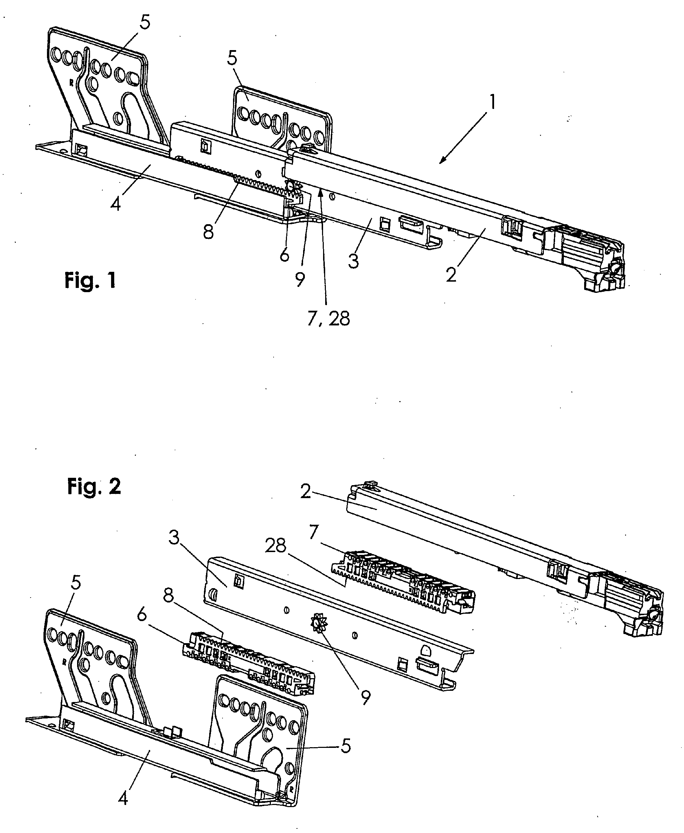

In Fig. 1 und in Fig. 2 ist eine Vollauszug-Schubladenführung - 1 für Möbel mit Schubladenschiene 2, Mittelschiene 3, Korpusschiene 4 mit Korpusadapter 5 und mit Wälzkörperwagen 6 und 7 gezeigt. Wie bereits aus dem Stand der Technik bekannt, gibt es hier nur einen oberen Wälzkörperwagen 7 und einen unteren Wälzkörperwagen 6. Die Wälzkörperwagen 6, 7 haben aber im Gegensatz zum Stand der Technik bereits die notwendigen Verbindungselemente an ihren beiden Enden, damit sie untereinander kombiniert und wiederholt lösbar gekoppelt werden können.

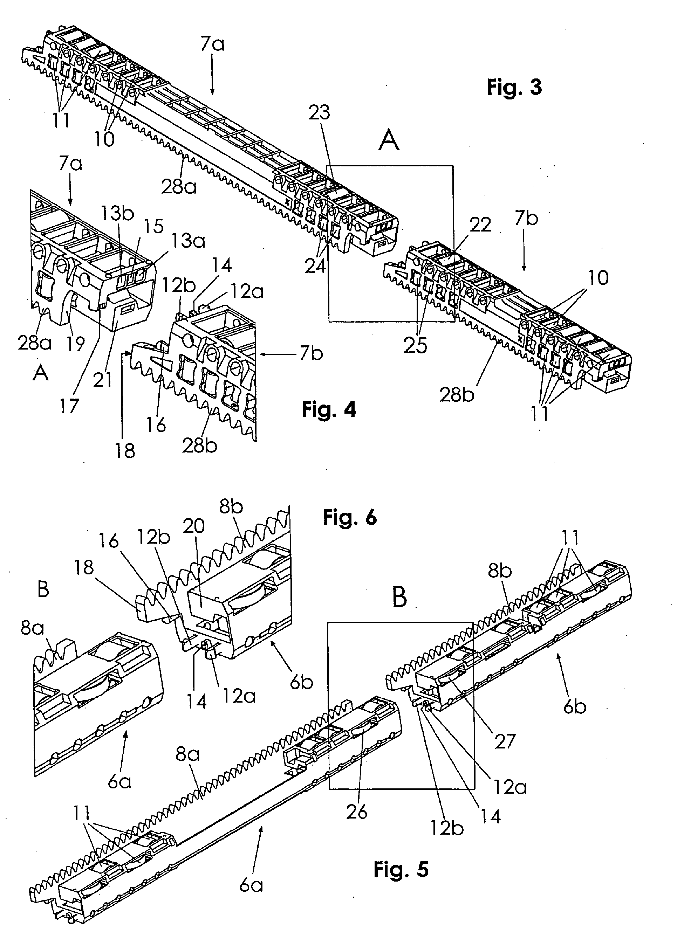

In Fig. 3 und Fig. 5 sieht man ein Beispiel der Bestückung von Wälzkörpern 11, 22-27 in den Wälzkörperkäfigen 10. Da viele Wälzkörperkäfige 10 vorhanden sind, kann man die Wälzkörper 11, 22, 27 besser platzieren, damit ihre Belastung ausgeglichen wird und sogar ihre Anzahl reduziert werden kann. Vorzugsweise werden zusätzliche Wälzkörper 22 und 23 im Mittelbereich des gesamten Wälzkörperwagen montiert, sowie die seitlichen Wälzkörper 24, 25, 26 und 27.

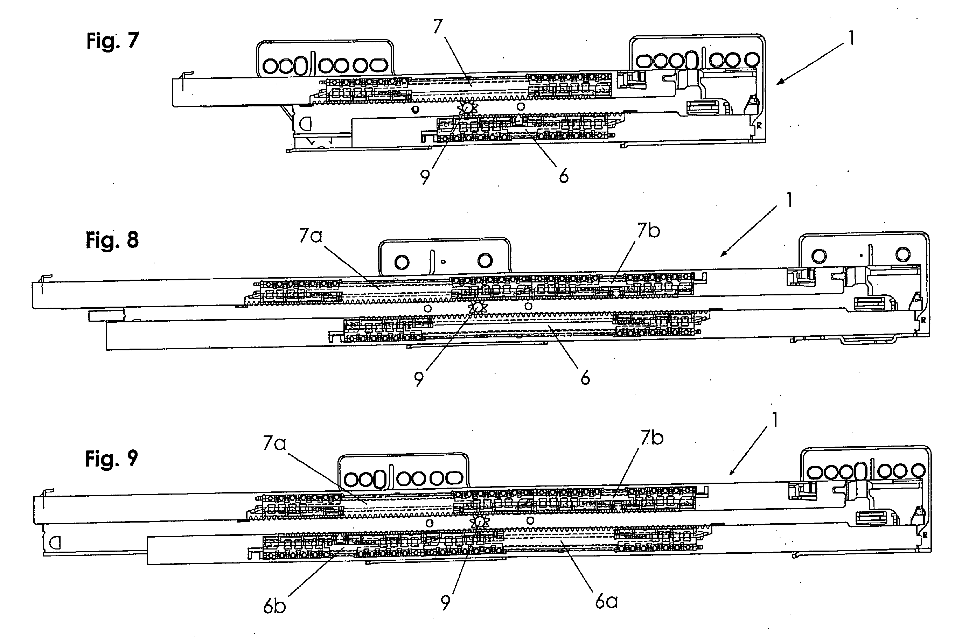

Die Verbindung zwischen zwei Wälzkörperwagen 6a, 6b und 7a, 7b ist in den Fig. 4 und Fig. 6 näher dargestellt:

Die stirnseitigen Haken 12a und 12b eines ersten Wälzkörperwagens 6b bzw. 7b werden in die hierzu passenden stirnseitigen Löcher 13a und 13b eines zweiten Wälzkörperwagens 6a bzw. 7a eingeklipst.

Der zwischen den Haken 12a und 12b des ersten Wälzkörperwagens 6b bzw. 7b befindliche Stift 14 sorgt hierbei nach dem Einführen in das zugehörige Loch 15 im zweiten Wälzkörperwagen 6a bzw. 7a für die Zentrierung im Loch 15 und somit für möglichst exaktes axiales Fluchten der beiden Wälzkörperwagen 6a und 6b zueinander, sowie der Wälzkörperwagen 7a und 7b zueinander.

Eine auf einem stirnseitigen Vorsprung der Zahnstange 8b bzw. 28b des ersten Wälzkörperwagens 6b bzw. 7b befindliche Zentriernase 16 sorgt für die Zentrierung der zwei Zahnstangen 8a und 8b bzw. 28a und 28b in einer auf einem stirnseitigen Rücksprung der Zahnstange 8a bzw. 28a des zweiten Wälzkörperwagens 6a bzw. 7a befindlichen Nut 17. Damit wird ein axiales Fluchten der beiden Zahnstangen 8a und 8b bzw. 28a und 28b gewährleistet und ein Verkanten der beiden Zahnstangen 8 und 8' zueinander wird ausgeschlossen, so dass das damit zusammenwirkende Synchron-Zahnrad 9 ohne Probleme über die Stoßstelle zwischen den beiden Zahnstangen 8a und 8b bzw. 28a und 28b laufen kann.

Zur weiteren Stabilisierung der fluchtend ausgerichteten Verbindung zwischen den beiden Wälzkörperwagen 6a und 6b bzw. 7a und 7b und deren Zahnstangen 8a und 8b bzw. 28a und 28b gibt es zusätzlichen Kontakt zwischen den stirnseitigen Flächen 18 und 19 der Zahnstangen 8a und 8b bzw. 28a und 28b, sowie 20 und 21 der Wälzkörperwagen 6a und 6b bzw. 7a und 7b Diese Flächen 18-21 werden möglichst groß gewählt, damit eine möglichst stabile Verbindung zwischen den beiden Wälzkörperwagen 6a und 6b bzw. 7a und 7b und deren Zahnstangen 8a und 8b bzw. 28a und 28b entsteht.

Die Fig. 7, Fig. 8 und Fig. 9 zeigen verschiedene Kombinationen von Wälzkörperwagen 6 und 7 in Schubladenführungen 1 :

Für kleine Schubladenlängen ist es nicht notwendig, Wälzkörperwagen zu kombinieren. Trotzdem können für einen besseren Ausgleich der Belastung der Wälzkörper oben und unten unterschiedlich lange Wälzkörperwagen 6, 7 verwendet werden (siehe Fig. 7). Der obere Wälzkörperwagen 7 ist also länger ausgebildet als der untere Wälzkörperwagen 6, so dass der Abstand zwischen dem vorderen und dem hinteren Wälzkörper größer sein kann, die dann die Hauptlast tragen, wenn die Schublade mindestens teilweise oder vollständig ausgezogen ist.

Eine andere Möglichkeit ist, die Wälzkörperwagen 7a, 7b z.B. oben zu kombinieren durch Aneinanderkoppeln und unten liegt dann nur ein einziger Wälzkörperwagen 6 (siehe Fig. 8). Die Länge des Wälzkörperwagens 6, 7 ist von der Länge der Führung abhängig.

Eine andere Möglichkeit ist, die Wälzkörperwagen 7a, 7b oben und die Wälzkörperwagen 6a, 6b unten zu kombinieren (siehe Fig. 9).

Man könnte natürlich auch eine 3er - Wälzkörperwagenkette mit drei aneinander gekoppelten Wälzkörperwagen 6 und/oder 7 machen, oder noch mehr als drei Wälzkörperwagen 6 und/oder 7 aneinander koppeln.

### Zeichnungslegende

- 1.: Schubladenführung
- 2.: Schubladenschiene
- 3.: Mittelschiene
- 4.: Korpusschiene
- 5.: Korpusadapter
- 6.: unterer Wälzkörperwagen, zwischen Korpusschiene und Mittelschiene → 6a, 6b
- 7.: oberer Wälzkörperwagen, zwischen Mittelsschiene und Schubladenschiene → 7a, 7b
- 8.: Zahnstange von 6 → 8a, 8b
- 9.: Zahnrad
- 10.: Wälzkörperkäfig
- 11.: Wälzkörper
- 12.: Haken → 12a, 12b
- 13.: Loch → 13a, 13b
- 14.: Stift
- 15.: Loch
- 16.: Zentriernase
- 17.: Nut
- 18.: Fläche
- 19.: Fläche
- 20.: Fläche
- 21.: Fläche
- 22.: Wälzkörper
- 23.: Wälzkörper
- 24.: Wälzkörper
- 25.: Wälzkörper
- 26.: Wälzkörper
- 27.: Wälzkörper
- 28.: Zahnstange von 7 → 28a, 28b

## Patentansprüche

1. Rollschubführung, insbesondere Schubladenführung (1) für Möbel, mit Schienen (2, 3, 4), die über Wälzkörper (11, 22-27) relativ zueinander in Längsrichtung verschieblich sind, welche Wälzkörper (11, 22-27) innerhalb von Wälzkörperkäfigen (10) von Wälzkörperwagen (6a, 6b, 7a, 7b) drehbar gelagert sind, **dadurch gekennzeichnet, dass** die Wälzkörperwagen (6a, 6b, 7a, 7b) Kopplungseinrichtungen (12-15) beinhalten, die zur wiederholt lösbaren, formschlüssigen und/oder kraftschlüssigen, unmittelbaren Kopplung mit mindestens einem benachbarten, zwischen den gleichen Schienen (2, 3 oder 3, 4) befindlichen, Wälzkörperwagen (6a, 6b, 7a, 7b) dienen.

2. Rollschubführung nach Anspruch 1, **dadurch gekennzeichnet, dass** die Wälzkörperwagen (6a, 6b, 7a, 7b) mindestens je eine vorspringende Kopplungseinrichtung (12, 14) und mindestens eine rückspringende Kopplungseinrichtung (13, 15) beinhalten, die mit jeweils entgegengesetzten rückspringenden (13) oder vorspringenden Kopplungseinrichtungen (12) eines benachbarten Wälzkörperwagens (6a, 6b, 7a, 7b) lösbar formschlüssig rastend, die Wälzkörperwagen (6a, 6b, 7a, 7b) koppelnd, zusammen wirken.

3. Rollschubführung nach Anspruch 2, **dadurch gekennzeichnet, dass** die mindestens eine vorspringende Kopplungseinrichtung (12, 14) von den äußeren Gruhdkonturen der Wälzkörperwagen (6a, 6b, 7a, 7b) vorspringt. und die mindestens eine rückspringende Kopplungseinrichtung (13, 15) von den äußeren Grundkonturen der Wälzkörperwagen (6a, 6b, 7a, 7b) zurückspringt.

4. Rollschubführung nach Anspruch 3, **dadurch gekennzeichnet, dass** die Kopplungseinrichtungen (12-15) stirnseitig angeordnet sind.

5. Rollschubführung nach Anspruch 3 oder 4, **dadurch gekennzeichnet, dass** die Kopplungseinrichtungen (12-15) von den äußeren Grundkonturen der Wälzkörperwagen (6a, 6b, 7a, 7b) in Bewegungsrichtung der Schublade voroder zurückspringen.

6. Rollschubführung nach einem der Ansprüche 1 bis 5, **dadurch gekennzeichnet, dass** die Kopplungseinrichtungen (12, 13) mindestens einen elastisch federnden Haken (12a, 12b) beinhalten und mindestens ein, mit dem Haken (1 2a, 12b) eines benachbarten Wälzkörperwagens (6a, 6b, 7a, 7b) zusammenwirkenden Loch (13a, 13b) beinhalten, in das der Haken (12a, 12b) lösbar formschlüssig rastend und koppelnd eingreifen kann.

7. Rollschubführung nach einem der Ansprüche 1 bis 6, **dadurch gekennzeichnet, dass** die Kopplungseinrichtungen (12-15) der Wälzkörperwagen (6a, 6b, 7a, 7b) mindestens eine Zentriereinrichtung (14, 15) beinhalten, zur fluchtenden Ausrichtung aneinander gekoppelter Wälzkörperwagen (6a, 6b, 7a, 7b) in den drei Raumachsen, nämlich in den Bewegungsrichtungen der Schublade, quer horizontal und quer vertikal dazu.

8. Rollschubführung nach Anspruch 7, **dadurch gekennzeichnet, dass** die mindestens eine Zentriereinrichtung (14, 15) mindestens einen Stift (14) und mindestens ein Loch (15) beinhaltet, die jeweils mit einem zugeordneten Loch (15) oder Stift (14) einer identischen Zentriereinrichtung (14, 15) eines benachbarten Wälzkörperwagens (6a, 6b, 7a, 7b) lösbar kraftschlüssig zentrierend koppelnd zusammen wirken können.

9. Rollschubführung nach einem der Ansprüche 1 bis 8, **dadurch gekennzeichnet, dass** die Kopplungseinrichtungen (12-15) und Zentriereinrichtungen (14, 15) unterschiedlicher Wälzkörperwagen (6a, 6b, 7a, 7b) zwischen den Schienen (2, 3) und/oder den Schienen (3, 4) identisch sind.

10. Rollschubführung nach einem der Ansprüche 1 bis 9, **dadurch gekennzeichnet, dass** zwei oder mehr Wälzkörperwagen (6a, 6b, 7a, 7b) aneinander gekoppelt sind.

11. Rollschubführung nach einem der Ansprüche 1 bis 10, **dadurch gekennzeichnet, dass** die Wälzköperkäfige (10) mindestens an ihren angekoppelten freien Enden mit Wälzkörpern (11, 22-27) bestückt sind.

12. Rollschubführung nach Anspruch 11, **dadurch gekennzeichnet, dass** die Wälzköperkäfige (10) zusätzlich und optional im Bereich der Kopplung der Wälzkörperwagen (6a, 6b, 7a, 7b) mit Wälzkörpern (11, 22-27) bestückt sind.

13. Rollschubführung nach einem der Ansprüche 1 bis 12, **dadurch gekennzeichnet, dass** die Gesamtlänge der gekoppelten oder ungekoppelten unteren Wälzkörperwagen (6; 6a, 6b) zwischen Mittelschiene (3) und Korpusschiene (4) unterschiedlich lang sind im Vergleich zur Gesamtlänge der gekoppelten oder ungekoppelten oberen Wälzkörperwagen (7; 7a, 7b) zwischen Mittelschiene (3) und Schubladenschiene (2).

14. Rollschubführung nach Anspruch 13, **dadurch gekennzeichnet, dass** die Gesamtlänge der gekoppelten oder ungekoppelten oberen Wälzkörperwagen (7; 7a, 7b) größer ist, als die Gesamtlänge der gekoppelten oder ungekoppelten unteren Wälzkörperwagen (6; 6a, 6b).

15. Rollschubführung nach einem der Ansprüche 1 bis 14, **dadurch gekennzeichnet, dass** bei einem Vollauszug-Schienensystem mit Schubladenschiene (2), Mittelschiene (3) und Korpusschiene (4), zwischen den Schienen (2, 3, 4) eine Laufweg-Synchronisation erfolgt und hierzu die Wälzkörperwagen (6a, 6b), die sich zwischen Korpusschiene (4) und Mittelschiene (3) befinden, je eine oder eine gemeinsame Zahnstange (8) aufweisen, die über ein Zahnrad (9) mit je einer oder einer gemeinsamen Zahnstange (28) der Wälzkörperwagen (7a, 7b), die sich zwischen Mittelschiene (3) und Schubladenschiene (2) befinden, synchronisiert in Verbindung stehen.

16. Rollschubführung nach Anspruch 15, **dadurch gekennzeichnet, dass** die Zahnstange (8, 28) eine Zentriereinheit (16, 17) besitzt zur fluchtenden Ausrichtung aneinander gekoppelter Zahnstangen (8, 28) und der Wälzkörperwagen (6a, 6b, 7a, 7b) in den drei Raumachsen, nämlich in Bewegungsrichtung der Schublade, quer horizontal und quer vertikal dazu.

17. Rollschubführung nach Anspruch 16, **dadurch gekennzeichnet, dass** die Zentriereinheit der Zahnstange (8, 28) eine auf einem axialen Vorsprung der Zahnstange (8, 28) angeordnete Zentriernase (16) besitzt, die mit einer Nut (17) eines axialen Rücksprungs einer benachbarten Zahnstange (8, 28) zusammenwirkt.
